Europäisches Patentamt

European Patent Office

Office européen des brevets

(11) Numéro de publication: **0 332 686 B1**

# FASCICULE DE BREVET EUROPEEN

(45) Date de publication de fascicule du brevet: **28.04.93** (51) Int. Cl.5: **C01B 13/32**

(21) Numéro de dépôt: **88908256.6**

(22) Date de dépôt: **27.09.88**

(86) Numéro de dépôt internationale :
**PCT/FR88/00471**

(87) Numéro de publication internationale :
**WO 89/02869 (06.04.89 89/08)**

(54) PROCEDE DE PREPARATION D'OXYDES METALLIOUES.

(30) Priorité: **29.09.87 FR 8713411**

(43) Date de publication de la demande:
**20.09.89 Bulletin 89/38**

(45) Mention de la délivrance du brevet:
**28.04.93 Bulletin 93/17**

(84) Etats contractants désignés:
**AT BE CH DE FR GB IT LI LU NL SE**

(56) Documents cités:
**GB-A- 2 170 189**
**US-A- 4 612 138**

**Chemical Abstracts, vol. 106, no. 2, January 1987 (Columbus, Ohio, US), see page 118, abstract No. 7090v & JP-A-61204033 (NGK SPARK PLUG CO. LTD) 10 September 1986**

(73) Titulaire: **Etablissement Public dit: CENTRE NATIONAL DE LA RECHERCHE SCIENTIFIOUE (CNRS)**
**15, Ouai Anatole France**
**F-75007 Paris(FR)**

(72) Inventeur: **COT, Louis**
**Résidence les Pins Clapiers**
**F-34170 Castelnau-le-Lez(FR)**
Inventeur: **ROUVIERE, Jacques, Claude**
**1207, rue de Las-Sorbes**
**F-34000 Montpellier(FR)**
Inventeur: **GUIZARD, Christian, Gilbert**
**Rue des Remparts Puechabon**
**F-34150 Gignac(FR)**
Inventeur: **LARBOT, André**
**940, rue du Ravin-d'Embarre**
**F-34980 Saint-Clément-la-Rivière(FR)**

(74) Mandataire: **Sueur, Yvette et al**
**Cabinet Yvette Sueur 35, rue de la Frette**
**F-95240 Cormeilles-en-Parisis (FR)**

Rank Xerox (UK) Business Services
(3.10/3.5x/3.0.1)

Ceramic Engineering and Science Proceedings, vol. 5, No. 5/6, May-June 1984 (Columbus, Ohio, US) L.C. Klein :"Oxide coatings from the Sol-Gel process", pages 379-384, see page 379, last paragraph

Chemical Abstracts, vol. 104, No. 16, April 1986 (Columbus, Ohio, US) dee page 148, abstract No. 132413n & JP-A-60251106 (SGENCY OF INDUSTRIAL SCIENCES AND TECHNOLOGY) 11 December 1985

## Description

La présente invention concerne un procédé de préparation d'oxydes métalliques à partir des alcoxydes des métaux correspondants.

On sait préparer des gels polymères d'oxydes métalliques par hydrolyse des alcoxydes de métaux correspondants. On a préparé en particulier à partir de ces gels, par pyrolyse, des poudres très fines d'oxydes métalliques.

On connait également les couches minces d'oxydes métalliques, ainsi que leur utilisation pour des couches conductrices ou antistatiques, des portes pour des fours à micro-ondes, des électrodes transparentes (pour cellules solaires), des vitres chauffantes, des écrans pour l'électronique.

Mais il est difficile de former des couches, en particulier à partir d'alcoxydes dont l'hydrolyse est très rapide, cette hydrolyse rapide conduisant en effet à une prise en masse rapide et donc à la formation d'un gel solide qui ne peut plus être couché. Habituellement, pour préparer des couches, on trempe d'abord le support dans la solution d'alcoxyde, puis on hydrolyse la solution déjà appliquée. Ainsi, l'obtention de couches de stannate de Cd ou de stannate de Ti ou de Sb, par trempage d'un support dans une solution alcoolique des oxydes métalliques, est décrite dans les brevets GB 2 009 723 et US 3 647 531 et dans "History and principles of the sol-gel process and some new multicomponent oxide coatings", H. Dislich et P Hinz, Journal of Non Crystalline Solids, 48 (1982) 11-16. La couche est hydrolysée après son application, par séchage en atmosphère humide, puis chauffée vers 500-650°C. Ces produits sont utilisés comme matériaux électroconducteurs, ou pour faire des fenêtres, des portes de four à micro-ondes, des panneaux solaires, etc.

Un tel procédé ne permet toutefois pas de contrôler la viscosité de la solution. Or on sait que les gels polymères sont des précurseurs de l'oxyde final souhaité, et donc que le contrôle de la formation de ces polymères permettrait de contrôler la structure de l'oxyde final obtenu. L'obtention d'une structure homogène du polymère est donc indispensable.

Une méthode a été préconisée dans l'art antérieur, et notamment dans "Sol-Gel Processing of Silica I.The role of the starting compounds" K.C. Chen, T. Tsuchiya et J.D. Mackensie, Journal of Non Crystalline Solids, 81 (1986) 227-237, et dans "Study of Polymerization Processes in Acid and Base Catalyzed Silica Sol-Gel", T.W. Zerda, J. Artaki et J. Jonas, Journal of Non Crystalline Solids, 81 (1986) 365-379. Elle consiste à ajouter goutte à goutte un mélange eau/alcool dans une solution de l'alcoxyde dans l'alcool. Cette méthode ne peut cependant donner des gels très homogènes; en effet, durant l'addition d'eau, la concentration de l'eau dans la solution n'est pas du tout homogène; elle est très élevée au niveau de la goutte ajoutée, et très faible partout ailleurs. Si cette méthode d'hydrolyse directe est appropriée par exemple pour les alcoxydes de silicium, elle ne l'est pas pour des alcoxydes d'autres métaux qui sont très instables et s'hydrolysent très rapidement, même simplement à l'humidité de l'air. On a également proposé un procédé d'hydrolyse d'un alcoxyde de métal dissous ou dispersé dans une émulsion eau dans l'huile (Chem. Abst. vol. 106, n°2, janvier 1987, p. 118, N° 7090v). Dans ce procédé, dans lequel aucun agent tensio-actif n'est utilisé, il se forme une émulsion de gouttelettes d'eau dans l'huile et l'hydrolyse de l'alcoxyde a lieu dans les gouttelettes d'eau. L'oxyde se forme par conséquent dans l'eau, d'où il est extrait par congélation pour être obtenu sous forme solide. Ce procédé présente des inconvénients: il ne permet pas de contrôler la vitesse d'hydrolyse et d'obtenir directement une couche d'oxyde métallique sur un support.

Ainsi, il est très souhaitable de trouver un procédé d'hydrolyse des alcoxydes de métaux permettant d'obtenir des solutions visqueuses de polymères ayant une structure homogène préformée et une viscosité adaptée au couchage sur un support et permettant de réguler l'épaisseur de la couche.

La présente invention a pour objet un procédé de préparation d'oxydes métalliques consistant à hydrolyser les alcoxydes de métal correspondants, puis à faire subir un traitement thermique au gel polymère obtenu de manière à obtenir lesdits oxydes, caractérisé en ce que l'hydrolyse est effectuée en mélangeant les alcoxydes de métal avec une émulsion de micelles inverses d'eau dans un solvant hydrophobe des alcoxydes contenant, un agent tensio-actif.

L'émulsion de micelles inverses eau / solvant hydrophobe des alcoxydes est stable, parfaitement homogène et transparente. La quantité d'eau libre échangée entre les micelles dépend du rapport molaire eau/agent tensioactif, désigné par la suite par n. Quand on mélange cette émulsion avec l'alcoxyde seul ou préalablement mis en solution dans ledit solvant hydrophobe, de façon homogène, l'alcoxyde consomme de l'eau, déplaçant ainsi l'équilibre et provoquant une libération d'eau progressive à partir des micelles. On peut contrôler la vitesse d'hydrolyse en jouant sur le rapport n eau/agent tensioactif et sur le rapport eau/alcoxyde h. L'hydrolyse peut dépendre aussi de la nature de l'agent tensioactif.

Pour obtenir une couche d'oxyde métallique, on applique sur un support le produit résultant du mélange de l'alcoxyde et de l'émulsion contenant les micelles inverses lorsqu'il n'est encore que partiellement hydrolysé, de sorte qu'il n'est pas complètement gélifié. La réaction d'hydrolyse se poursuivra après l'application du produit sur le support.

Outre l'avantage de permettre l'obtention d'un gel polymère à structure préformée homogène et de viscosité contrôlée, le procédé selon l'invention met en oeuvre un solvant hydrophobe dans lequel les alcoxydes sont en général beaucoup plus solubles que dans l'alcool, ce qui permet de préparer des solutions plus concentrées et, par conséquent, des couches plus épaisses. De plus, un solvant hydrophobe a une tendance moindre à consommer l'humidité atmosphérique et donc à interférer sur l'hydrolyse; en outre, certains de ces solvants hydrophobes à point d'ébullition élevé, en engendrant une atmosphère gazeuse réductrice au cours du traitement thermique, favorisent la formation d'ions métalliques de valence inférieure, ce qui est particulièrement intéressant, par exemple pour l'obtention de couches conductrices.

Le solvant hydrophobe utilisé peut être un alcane, ayant de préférence de 7 à 15 atomes de carbone, un hydrocarbure aromatique tel que le benzène ou le toluène, ou un solvant chloré tel que le chlorure de méthylène ou le tétrachlorure de carbone. Le choix du solvant peut être fait par l'homme de métier en fonction de la solubilité de l'alcoxyde mis en oeuvre et de l'utilisation finale prévue. La concentration finale c de l'alcoxyde est avantageusement comprise entre 0,4 et 3 moles/litre.

Un agent tensioactif non ionique donne des résultats satisfaisants dans la mise en oeuvre du procédé selon l'invention. On peut utiliser par exemple, un octylphénol ou un nonylphénol éthoxylé, ou un alcool à chaîne ramifiée éthoxylé. On peut également utiliser des agents tensioactifs ioniques, comprenant des éléments minéraux tel que S, P, Na, K, Li, F, Cl.

L'eau des micelles inverses de l'émulsion peut être présente sous forme d'une solution aqueuse d'un acide ou d'une base organique ou minéral, ou d'une solution de sels minéraux, ce qui permet de régler les conditions de formation du polymère minéral et, par conséquent, sa structure.

La concentration en eau est donnée par le rapport molaire eau/alcoxyde désigné dans la suite par h; h est, de préférence, compris entre 0,01 et 10. La concentration en agent tensioactif, qui est donnée par le rapport molaire n eau/agent tensioactif, et qui conditionne la vitesse d'hydrolyse comme on l'a indiqué précédemment, est avantageusement compris entre 0,4 et 3.

Le temps de gélification peut varier entre quelques secondes et plusieurs jours, suivant les valeurs de c, h et n.

Comme alcoxydes de métaux, on peut utiliser des alcoxydes inférieurs à chaîne droite ou ramifiée, comprenant de 1 à 8 atomes de carbone, par exemple des éthoxydes, des propoxydes, des isopropoxydes, des butoxydes.

Le procédé de l'invention peut être mis en oeuvre pour différents métaux parmi lesquels on peut citer: le titane, le vanadium, le cadmium, l'indium, l'étain, l'antimoine, les métaux de transition (tels que cobalt, le nickel, le cuivre, le zinc, le manganèse), le zirconium, le plomb, le baryum, le strontium, l'yttrium, le bismuth, l'aluminium, le silicium et les terres rares. Les métaux sont choisis de façon à obtenir les oxydes métalliques finals désirés.

Lorsque l'on veut obtenir des oxydes mixtes, on peut mélanger des alcoxydes de différents métaux dans des proportions correspondant à la composition de l'oxyde final désiré. On peut également utiliser des alcoxydes doubles. La solubilité des alcoxydes dans le solvant considéré est un facteur important qui peut être déterminé par l'homme de métier. On peut aussi introduire des métaux par tout autre moyen, tel que l'utilisation d'un agent tensioactif contenant des ions minéraux, ou d'eau contenant des sels métalliques.

De nombreux alcoxydes utilisés sont des produits commerciaux. Ils peuvent être préparés par des procédés connus consistant à faire réagir un alcool sur un sel de métal en milieu alcalin. Il est connu, par exemple, de préparer des alcoxydes de silicium, de germanium, de titane, de zirconium, de hafnium, de niobium, de tantale, d'antimoine, de vanadium, de cerium, d'uranium, de thorium, de plutonium, par réaction du chlorure métallique correspondant sur un alcool en présence d'ammoniac, suivant la réaction: $MClx + x\ ROH + x\ NH3 \rightarrow M(OR)x + NH4Cl$ (Cf. "Metal Alkoxydes" D.C. Bradley, Academic Press (1978)).

Il est avantageux d'ajouter à l'émulsion, un polymère organique soluble dans cette émulsion. La nature et la masse moléculaire du polymère ajouté permettent d'adapter les propriétés chimiques et rhéologiques du milieu réactionnel au mode de mise en forme du matériau avant traitement thermique en vue d'obtenir des films ou des fibres. Parmi les polymères convenables, on peut citer le polypropylène, le polyacétate de vinyle, le polyamide ou le polyoxyéthylène.

Lors de la préparation de couches d'oxydes, on peut utiliser tout support n'ayant pas d'influence sur les propriétés souhaitées pour la couche d'oxyde finale et résistant au traitement thermique ultérieur. Le procédé de l'invention permettant d'effectuer un traitement thermique à des températures inférieures à celles qui sont requises dans l'art antérieur, des supports ne résistant que jusqu'à des températures de l'ordre de 500 °C peuvent néanmoins être utilisés. Parmi ces supports, on peut citer le verre ordinaire. Le produit partiellement hydrolysé peut être appliqué sur le support par tout procédé connu, par exemple par enduction centrifuge ou par trempage.

Les couchages obtenus sont séchés, puis recuits sous atmosphère soit oxydante, soit réductrice, en fonction des différents degrés d'oxydation souhaités pour les métaux du composé final, pour éliminer les restes organiques et recristalliser l'oxyde. On observe que l'on obtient ces oxydes à des températures inférieures à celles qui étaient nécessaires dans la technique antérieure.

La présente invention est illustrée de façon non limitative par les exemples suivants.

Dans ces exemples, c représente la concentration molaire de l'alcoxyde dans le mélange réactionnel, n représente le rapport molaire eau/agent tensioactif et h représente le rapport molaire eau/alcoxyde.

## EXEMPLE 1

Cet exemple concerne la préparation d'oxyde de vanadium.

On a préparé une solution à 50% de pentaisopropoxyde de vanadium (V) dans le décane, à partir de pentaisopropoxyde de vanadium (V) sous forme liquide. On a préparé une émulsion de micelles inverses d'eau dans le décane avec, comme agent tensioactif, le Triton X 35 (produit par Rohm & Haas) qui est un octylphénol éthoxylé de poids moléculaire 338. On a ajouté l'émulsion à la solution d'alcoxyde. Les quantités utilisées pour les divers constituants étaient telles que

$c = 0,5$ mole/l
$h = 0,7$
$n = 0,6$

La gélification était achevée au bout de 10 à 12 heures. On estime qu'il y a formation de gel lorsque la viscosité devient infinie au point d'inflexion de la courbe $\eta = f(t)$. La mesure a été effectuée à l'aide d'un rhéomètre rotatif cylindrique du type Couette.

## EXEMPLE 2

On mis en oeuvre le mode opératoire et les réactifs de l'exemple 1, mais six heures après le début de l'hydrolyse, on a appliqué une couche du produit réactionnel sur un substrat de verre par enduction centrifuge et l'on a chauffé. On a ainsi obtenu une couche de V205 de 200 nm d'épaisseur.

## EXEMPLE 3

Cet exemple concerne la préparation d'oxyde de titane.

L'alcoxyde utilisé était le tétra-tert-butoxyde de titane sous forme liquide, non dilué.

On a préparé une émulsion de micelles inverses d'eau dans le décane avec, comme agent tensioactif, le Triton X35 de l'exemple 1.

L'alcoxyde a ensuite été ajouté sans dilution préalable, sous agitation, à l'émulsion micellaire inverse.

Les proportions des différents réactifs mis en oeuvre étaient telles que

$c = 0,8$ mole/l
$h = 0,7$
$n = 0,6$

Le temps de gélification, contrôlé par viscosimétrie, était de 80 minutes environ.

## EXEMPLE 4

On a mis en oeuvre le mode opératoire et les réactifs de l'exemple 3, mais en préparant des films à partir d'un produit réactionnel partiellement hydrolysé ayant une viscosité inférieure à 4000 centipoises. La gélification s'est effectuée après la formation du film et a donné par calcination à 400°C une couche d'oxyde TiO2.

## EXEMPLE 5

On a préparé une solution de tétra-tert-butoxyde de titane dans le tétrachlorure de carbone. Puis on a préparé une émulsion de micelles inverses d'eau dans le tétrachlorure de carbone avec, comme agent tensioactif, le Triton N42 (produit par Rohm & Haas) qui est un nonylphénol éthoxylé de masse molaire 396. A cette émulsion, on a ajouté du polyacétate de vinyle qui est soluble dans le milieu réactionnel, à raison de 5% en poids par rapport au milieu réactionnel.

La solution de tétra-tert-butoxyde de titane a été ajoutée à l'émulsion maintenue sous agitation.

Les proportions des différents réactifs mis en oeuvre étaient telles que

$c = 1$ mole/l.
$h = 2$
$n = 1,2$

Le temps nécessaire pour l'obtention d'un gel, évalué selon le procédé de l'exemple 3, était de 5 heures environ.

## EXEMPLE 6

Cet exemple concerne la préparation d'oxyde de silicium à partir de tétraéthoxysilane.

On a préparé une émulsion de micelles inverses d'eau dans le décane avec, comme agent tensioactif, du Triton X35. On a ajouté à cette émulsion, 0,1% en mole d"HCl par rapport à l'eau nécesaire à la formation des micelles inverses, afin de catalyser la réaction.

Le tétraéthoxysilane a ensuite été ajouté sous agitation au milieu réactionnel.

Les proportions des différents réactifs étaient telles que:

$c$ = 2 moles/l.
$h$ = 2
$n$ = 4

Dans ces conditions, un gel a été obtenu en 10 heures environ. Une calcination à 400°C pendant 5 heures environ a permis d'obtenir SiO2.

EXEMPLE 7

Cet exemple concerne la préparation d'oxyde de zirconium à partir de tétra-n-propoxyde de zirconium du commerce.

On a préparé une émulsion de micelles inverses d'eau dans le décane, avec, comme agent tensioactif, le Triton X45 (produit par Rohm & Haas) qui est un octylphénol éthoxylé ayant une masse molaire de 426.

L'alcoxyde a été ajouté à l'émulsion micellaire sous agitation.

Les proportions des différents réactifs mis en oeuvre sont telles que

$c$ = 1 mole/l.
$h$ = 0,5
$n$ = 1,1

Le temps de gel pour cette préparation était de 20 minutes environ. Une calcination à 400°C a permis d'obtenir l'oxyde correspondant ZrO2.

EXEMPLE 8

Cet exemple illustre la préparation d'un oxyde mixte d'yttrium et d'aluminium, à partir d'isopropoxyde double d'yttrium et d'aluminium. On a préparé une émulsion de micelles inverses d'eau dans le décane avec, comme agent tensioactif, le Triton X35.

L'isopropoxyde double en solution dans le décane a été ajouté sous agitation à l'émulsion micellaire inverse.

Les proportions des différents réactifs mis en oeuvre étaient telles que

$c$ = 1,7 mole/l. $h$ = 1, $n$ = 0,8

Le temps de gel pour cette préparation était de 10 heures environ.

Les propriétés rhéologiques de l'émulsion avant gélification ont permis d'obtenir une couche mince donnant par calcination à 400°C, une couche d'oxyde mixte correspondant.

EXEMPLE 9

On a ajouté lentement du tétraéthoxysilane sous agitation à une émulsion de micelles inverses d'eau dans le benzène avec de l'AOT qui est un agent tensioactif anionique à deux chaînes carbonées (produit par Fluka).

Les proportions des différents réactifs étaient telles que

$c$ = 2 moles/l.
$h$ = 2
$n$ = 1

Le temps de gélification pour cette préparation était de 5 heures environ.

EXEMPLE 10

On a ajouté un mélange équimolaire de tétra-n-propoxyde de zirconium et de tétraéthoxysilane à une émulsion de micelles inverses d'eau dans le décane, en présence de Triton X45 tel qu'utilisé dans l'exemple 7. La proportion des différents réactifs mis en oeuvre était telle que

$c$ = 1,5 mole/l.
$h$ = 1,0
$n$ = 1,0

Le gel obtenu a été séché et broyé pour obtenir une poudre. Après calcination de la poudre à 900°C, on a mis en évidence la présence de Zircone ZrSiO4.

Les couches d'oxyde métallique ainsi obtenues peuvent être utilisées pour la réalisation de couches compactes pour revêtements présentant des propriétés spéciales telles la conduction électrique, la transmission de ou l'opacité à certains rayonnements, la résistance mécanique, la protection thermique. On peut réaliser également par le procédé de l'invention des couches microporeuses utilisées en tant que membranes dans des techniques séparatives.

**Revendications**

1. Procédé de préparation d'oxydes métalliques consistant à hydrolyser les alcoxydes de métal correspondants, puis à faire subir un traitement thermique au gel polymère obtenu de manière à obtenir lesdits oxydes, caractérisé en ce que l'hydrolyse est effectuée par mise en contact des alcoxydes de métal avec une émulsion contenant des micelles inverses d'eau dans un solvant hydrophobe des alcoxydes, ladite émulsion contenant en outre un agent tensioactif.

2. Procédé selon la revendication 1, caractérisé en ce que le mélange alcoxydes/émulsion est appliqué en couche sur un support lorsqu'il n'est que partiellement hydrolysé.

3. Procédé selon l'une quelconque des revendications 1 ou 2, caractérisé en ce qu'un oxyde mixte est préparé à partir d'un mélange d'alcoxydes des différents métaux se trouvant dans ledit oxyde mixte.

4. Procédé selon l'une quelconque des revendications 1 ou 2, caractérisé en ce que qu'un oxyde mixte est préparé à partir d'un alcoxyde double.

5. Procédé selon l'une quelconque des revendications précédentes, caractérisé en ce que les alcoxydes sont utilisés en solution dans un solvant hydrophobe identique à celui qui fait partie de l'émulsion.

6. Procédé selon l'une quelconque des revendications précédentes, caractérisé en ce que le métal est choisi parmi le titane, le vanadium, le cadmium, l'indium, l'étain, l'antimoine, les métaux de transition (tels que le cobalt, le nickel, le cuivre, le zinc, le manganèse), le zirconium, le plomb, le baryum, le strontium, l'yttrium, le bismuth, l'aluminium, le silicium et les terres rares.

7. Procédé selon l'une quelconque des revendications précédentes, caractérisé en ce que le solvant hydrophobe est un alcane, un hydrocarbure aromatique ou un solvant chloré.

8. Procédé selon la revendication 7, caractérisé en ce que le solvant est le décane.

9. Procédé selon la revendication 7, caractérisé en ce que le solvant est le tétrachlorure de carbone.

10. Procédé selon la revendication 7, caractérisé en ce que le solvant est le benzène.

11. Procédé selon l'une quelques des revendications précédentes, caractérisé en ce que l'agent tensioactif est un agent tensioactif non ionique.

12. Procédé selon la revendication 11, caractérisé en ce que l'agent tensioactif est un alcool à chaîne ramifiée éthoxylé ou un phénol éthoxylé.

13. Procédé selon l'une quelconque des revendications 1 à 10, caractérisé en ce que l'agent tensioactif est un agent tensioactif ionique.

14. Procédé selon la revendication 13, caractérisé en ce que l'agent tensioactif contient au moins un élément choisi parmi S, P, Na, K, Li, F, Cl.

15. Procédé selon l'une quelconque des revendications précédentes, caractérisé en ce que l'eau des micelles inverses de l'émulsion est présente sous forme de solution aqueuse d'un acide, d'une base ou de sels minéraux.

16. Procédé selon l'une quelconque des revendications précédentes, caractérisé en ce que les alcoxydes sont des alcoxydes inférieurs ayant de 1 à 8 atomes de carbone.

17. Procédé selon la revendication 16, caractérisé en ce que l'alcoxyde est un éthoxyde, un propoxyde, un isopropoxyde, un butoxyde ou un mélange de deux ou plusieurs de ces composés.

18. Procédé selon l'une des revendications précédentes, caractérisé en ce que l'émulsion contenant les micelles inverses contient en outre un polymère organique.

19. Procédé selon la revendication 18, caractérisé en ce que le polymère est choisi parmi le polypropylène, le polyacétate de vinyle, le polyamide ou le polyoxyéthylène.

**Claims**

1. Method for the preparation of metallic oxides comprising hydrolyzing alkoxides of the corresponding metals, then submitting the polymer gel obtained to thermal treatment in such a manner as to obtain said oxides, wherein hydrolysis is carried out by contacting metal alkoxides with an emulsion which contains reverse micelles of water in a hydrophobic solvent for alcoxides, said emulsion further containing a surfactant.

2. Method according to claim 1 wherein the alkoxide/emulsion mixture is applied as a layer to a support when it is only partially hydrolyzed.

3. Method according to claims 1 or 2 wherein a mixed oxide is prepared from a mixture of alkoxides of the various metals present in said mixed oxide.

4. Method according to claims 1 or 2 wherein a mixed oxide is prepared from a double alkoxide.

5. Method according to any one of the preceeding claims, wherein the alkoxides are used in solution in a hydrophobic solvent identical to that constituting part of the emulsion.

6. Method according to any one of the preceeding claims, wherein the metal is chosen from titanium, vanadium, cadmium, indium, tin, antimony, the transition metals (such as cobalt, nickel, copper, zinc, manganese), zirconium, lead, barium, strontium, yttrium, bismuth, aluminium, silicon and the rare-earth metals.

7. Method according to any one of the preceeding claims, wherein the hydrophobic solvent is an alkane, an aromatic hydrocarbon or a chlorinated solvent.

8. Method according to claim 7 wherein the solvent is decane.

9. Method according to claim 7 wherein the solvent is carbon tetrachloride.

10. Method according to claim 7 wherein the solvent is benzene.

11. Method according to any one of the preceeding claims, wherein the surfactant is a non-ionic surfactant.

12. Method according to claim 11, wherein the surfactant is an ethoxylated branched chain alcohol or an ethoxylated phenol.

13. Method according to any one of the preceeding claims, wherein the surfactant is an ionic surfactant.

14. Method according to claim 13 wherein the surfactant contains at least one element chosen from S, P, Ha, K, Li, F, Cl.

15. Method according to any one of the preceeding claims, wherein the water of the reverse micelles of the emulsion is present in the form of an aqueous solution of an acid, a base or mineral salts.

16. Method according to any one of the preceeding claims, wherein the alkoxides are lower alkoxides having 1 to 8 carbon atoms.

17. Method according to claim 16 wherein the alkoxide is an ethoxide, a propoxide, an isopropoxide, a butoxide or a mixture of two or more of these compounds.

18. Method according to any one of the preceeding claims, wherein the emulsion which contains the reverse micelles further contains an organic polymer.

19. Method according to claim 18 wherein the polymer is chosen from polypropylene, vinyl polyacetate, polyamide or polyoxyethylene.

**Patentansprüche**

1. Verfahren zur Herstellung von Metalloxiden, welches darin besteht, die entsprechenden Metallalkoxide zu hydrolysieren, anschließend das erhaltene polymere Gel einer thermischen Behandlung zu unterwerfen, derart daß die Oxide erhalten werden, **dadurch gekennzeichnet,** daß die Hydrolyse durch Zusammenbringen der Metallalkoxide mit einer Emulsion bewirkt wird, die inverse Micellen von Wasser in einem hydrophoben Lösungsmittel der Alkoxide enthält, wobei die Emulsion im übrigen ein oberflächenaktives Mittel enthält.

2. Verfahren nach Anspruch 1, **dadurch gekennzeichnet,** daß die Mischung Alkoxide/Emulsion als Überzug auf einen Träger aufgebracht wird, während sie nur teilweise hydrolysiert ist.

3. Verfahren nach einem der Ansprüche 1 oder 2, **dadurch gekennzeichnet,** daß ein gemischtes Oxid ausgehend aus einer Mischung von Alkoxiden der verschiedenen Metalle, die sich in dem gemischten Oxid befinden, hergestellt wird.

4. Verfahren nach einem der Ansprüche 1 oder 2, **dadurch gekennzeichnet,** daß ein gemischtes Oxid, ausgehend von einem doppelten Alkoxid, hergestellt wird.

5. Verfahren nach einem der vorhergehenden Ansprüche, **dadurch gekennzeichnet,** daß die Alkoxide in Lösung in einem hydrophoben Lösungsmittel verwendet werden, welches identisch ist mit dem, welches Teil der Emulsion ist.

6. Verfahren nach einem der vorhergehenden Ansprüche, **dadurch gekennzeichnet,** daß das Metall ausgewählt wird aus Titan, Vanadium, Cadmium, Indium, Zinn, Antimon, den Übergangsmetallen (wie Kobalt, Nickel, Kupfer, Zink, Mangan), Zirconium, Blei, Barium, Strontium, Yttrium, Bismut, Aluminium, Silicium und den seltenen Erden.

7. Verfahren nach einem der vorhergehenden Ansprüche, **dadurch gekennzeichnet,** daß das hydrophobe Lösungsmittel ein Alkan, ein aromatischer Kohlenwasserstoff oder ein chloriertes Lösungsmittel ist.

8. Verfahren nach Anspruch 7, **dadurch gekennzeichnet,** daß das Lösungsmittel Decan ist.

9. Verfahren nach Anspruch 7, **dadurch gekennzeichnet,** daß das Lösungsmittel Tetrachlorkohlenstoff ist.

10. Verfahren nach Anspruch 7, **dadurch gekennzeichnet,** daß das Lösungsmittel Benzol ist.

11. Verfahren nach einem der vorhergehenden Ansprüche, **dadurch gekennzeichnet,** daß das oberflächenaktive Mittel ein nichtionisches oberflächenaktives Mittel ist.

12. Verfahren nach Anspruch 11, **dadurch gekennzeichnet,** daß das oberflächenaktive Mittel ein ethoxylierter Alkohol mit einer verzweigten Kette oder ein ethoxyliertes Phenol ist.

13. Verfahren nach einem der Ansprüche 1 bis 10, **dadurch gekennzeichnet,** daß das oberflächenaktive Mittel ein ionisches oberflächenaktives Mittel ist.

14. Verfahren nach Anspruch 13, **dadurch gekennzeichnet,** daß das oberflächenaktive Mittel mindestens ein Element, ausgewählt aus S, P, Na, K, Li, F, Cl, enthält.

15. Verfahren nach einem der vorhergehenden Ansprüche, **dadurch gekennzeichnet,** daß das Wasser der inversen Micellen der Emulsion in der Form einer wäßrigen Lösung einer Säure, einer Base oder von anorganischen Salzen vorliegt.

16. Verfahren nach einem der vorhergehenden Ansprüche, **dadurch gekennzeichnet,** daß die Alkoxide niedere Alkoxide mit 1 bis 8 Kohlenstoffatomen sind.

17. Verfahren nach Anspruch 16, **dadurch gekennzeichnet,** daß das Alkoxid ein Ethoxid, ein Propoxid, ein Isopropoxid, ein Butoxid oder ein Gemisch von zwei oder mehreren dieser Verbindungen ist.

18. Verfahren nach einem der vorhergehenden Ansprüche, **dadurch gekennzeichnet,** daß die Emulsion, welche die inversen Micellen enthält, darüberhinaus ein organisches Polymer enthält.

19. Verfahren nach Anspruch 18, **dadurch gekennzeichnet,** daß das Polymer ausgewählt wird aus Polypropylen, Polyvinylacetat, Polyamid oder Polyoxyethylen.